# EUROPEAN PATENT SPECIFICATION

(11) **EP 3 189 966 B1**
(45) Date of publication and mention of the grant of the patent: **29.08.2018**
(21) Application number: 15837473.6
(22) Date of filing: 31.08.2015
(51) Int. Cl.: B32B 27/12, B29C 44/14, D04H 1/587, D04H 1/62

(54) **NONWOVENS FOR REINFORCING FOAM-MOLDED ARTICLE**
VLIESSTOFF ZUR VERSTÄRKUNG VON SCHAUMGEFORMTEM ARTIKEL
NON TISSE POUR LE RENFORCEMENT D'ARTICLES MOUSSE

(30) Priority: 01.09.2014 JP 2014176983; 01.09.2014 JP 2014176984; 12.09.2014 JP 2014186136; 30.10.2014 JP 2014221455
(43) Date of publication of application: 12.07.2017
(73) Proprietor: Toyobo Co., Ltd., Osaka-shi Osaka 530-8230 (JP)
(72) Inventor: KOIDA, Takashi, Osaka-shi Osaka 530-8230 (JP); INATOMI, Shinichiro, Osaka-shi Osaka 530-8230 (JP); YOSHIDA, Hideo, Otsu-shi Shiga 520-0292 (JP)
(74) Representative: Müller-Boré & Partner Patentanwälte PartG mbB
(86) International application number: PCT/JP2015/074595
(87) International publication number: WO 2016/035732

(56) References cited:
- EP-A1- 2 447 402
- WO-A1-2013/176176
- JP-A- H02 258 332
- JP-A- H04 141 405
- JP-A- 2015 048 544

## Description

### FIELD OF THE INVENTION

The present invention relates to a nonwoven for reinforcing a foam-molded article. More specifically, the present invention relates to a nonwoven that is optimal for reinforcing a foam-molded article and excellent in mold-setting-property when foaming.

### DESCRIPTION OF THE RELATED ART

In recent years, a foamed urethane molded product is widely used as a cushioning material for seats or the like. Generally, a foamed urethane molded product that is integrated with a reinforcing nonwoven when molding, is used. Such a reinforcing nonwoven is set between the foamed urethane molded product and a metal spring of an automobile seat, and functions to uniformly disperse the cushioning action of the metal spring and to protect the foamed urethane molded product from friction generated by the metal spring. In order to produce a cushioning material using the reinforcing nonwoven, the reinforcing nonwoven is firstly punched or cut to fit the shape of a cushion to be produced, and sewed. Further, a hole is formed to set in a mold. Thereafter, it is set in the mold by penetrating a setting tool such as a projection or a pin attached to the mold through the hole, and urethane is then foamed, thereby to produce a foamed urethane molded product.

In recent years, since various sensors or functions are provided in an automobile seat, the shape thereof becomes complicated, and a burden such as sewing for the reinforcing nonwoven is increased, and leading to increase in process steps and cost. As described above, setting of the reinforcing nonwoven in a mold also becomes a burden, thus various methods are provided. For example, there is a method in which a staple, a metal, or the like is attached to a reinforcing nonwoven, and magnetic force of a magnet or the like attached to a mold is utilized, and a method in which an adhesive or the like is applied to a reinforcing nonwoven or a mold.

In a method of attaching a staple, a metal, or the like, magnetic force of a magnet or the like needs to be provided in a mold in advance, thus a problem of increasing labor and cost arises since, for example, a place where the magnet or the like is attached is changed each time the design is changed. In a method of using an adhesive, a problem arises that a mold is contaminated.

In Patent Literature 1 suggests a method of setting a reinforcing nonwoven in a forming mold where an attaching pin is provided in advance. However, in this method, it is necessary to set an attaching pin in a mold each time a foamed shape is changed. Furthermore, there is a possibility that a reinforcing nonwoven may be damaged when taken out from the mold after foaming.

In Patent Literature 2 suggests a method of allowing a reinforcing nonwoven to be magnetic by previously mixing powder or iron filings into a binder for the reinforcing nonwoven. However, in this method, removal of the iron powder or the iron filings caused by contact with a metal spring may contaminate the inside of a vehicle or make a strange noise. Further, it may be difficult to detect a mixed metal in the reinforcing nonwoven, for example, a mixed punching-needle used in a process of producing the reinforcing nonwoven.

In Patent Literature 3 suggests a method of mounting a reinforcing nonwoven to a foaming mold by attracting a wire attached to the reinforcing nonwoven by a permanent magnet provided in the mold. However, also in this method, a process of attaching the wire to the reinforcing nonwoven is added. Furthermore, it is necessary to provide the permanent magnet the foaming mold.

### CITATION LIST

### [PATENT LITERATURE]

[PATENT LITERATURE 1] JP-A-2004-358916
[PATENT LITERATURE 2] JP-A-2001-252930
[PATENT LITERATURE 3] JP-A-2008-194957

JP H04141405 discloses a nonwoven for reinforcing a foam-molded article, the nonwoven comprising: a reinforcing nonwoven layer and a resin layer, wherein the resin layer overlaps the reinforcing nonwoven layer.

### SUMMARY OF THE INVENTION

### PROBLEMS TO BE SOLVED BY THE INVENTION

To date, a method of easily setting a reinforcing nonwoven with the use of a conventional mold without improving the mold, and without contaminating has not been suggested. The present invention is made on the background of the conventional art. An object of the present invention is to provide a reinforcing nonwoven for a foam-molded article, which makes it possible to further improve a mold-setting-property of the reinforcing nonwoven, and makes it possible to foam-mold a cushioning material efficiently.

### SOLUTION TO THE PROBLEMS

As a result of thorough study for solving the aforementioned problem, the inventors of the present invention have found that setting becomes easy by applying a resin to the reinforcing nonwoven in advance, wherein the resin allows the reinforcing nonwoven and a mold to be adhered to each other at the temperature where a mold is generally raised to 60°C or higher to foam urethane and produce a urethane foam-molding, and have arrived at the present invention.

That is, the present inventions are as follows.
1. A nonwoven for reinforcing a foam-molded article, the nonwoven comprising: a reinforcing nonwoven layer; and a resin layer; wherein, the resin layer overlaps the reinforcing nonwoven layer, a resin for the resin layer has a softening point A of not lower than 20°C and not higher than 60°C, and the nonwoven has an air permeability of not lower than 30 cc/cm²/sec and not higher than 300 cc/cm²/sec.
2. The nonwoven for reinforcing a foam-molded article of the above 1, wherein, a mold-setting-property at 70°C is not lower than 1.5 N/ϕ22 mm.
3. A nonwoven for reinforcing a foam-molded article, the nonwoven comprising: a reinforcing nonwoven layer; and a resin layer; wherein, the resin layer overlaps the reinforcing nonwoven layer, a resin for the resin layer has a melting point of not lower than 30°C and not higher than 60°C, the resin for the resin layer has a melting energy of not lower than 40 J/g and not higher than 100 J/g, and the nonwoven has an air permeability of not lower than 30 cc/cm²/sec and not higher than 300 cc/cm²/sec.
4. The nonwoven for reinforcing a foam-molded article of any one of the above 1 to 3, wherein, the resin layer is linearly arranged at intervals.
5. The nonwoven for reinforcing a foam-molded article of any one of the above 1 to 3, wherein, the resin layer is arranged in a dot pattern.

### ADVANTAGEOUS EFFECTS OF THE INVENTION

A resin layer overlaps a reinforcing nonwoven layer in the nonwoven for reinforcing a foam-molded article of the present invention, and a resin for the resin layer is selected from the resin that may be softened at a mold temperature when foaming. Furthermore, a cushioning material having a good appearance may be produced since gas generated during foaming may be removed by maintaining an air permeability of the nonwoven for reinforcing a foam-molded article as a certain or higher.

As a result, a nonwoven for reinforcing a foam-molded article, that makes it possible to use a conventional mold, to set only-sewed nonwoven for reinforcing a foam-molded article in the mold efficiently, and to improve workability, was produced. Since a mold is not contaminated after foam-molding, and further a forming property of the nonwoven for reinforcing a foam-molded article may not be not influenced, the nonwoven for reinforcing a foam-molded article has advantage in that the nonwoven for reinforcing a foam-molded article may be used in a method identical to a conventional method.

### BRIEF DESCRIPTION OF THE DRAWINGS

[FIG. 1] FIG. 1 illustrates a result of measuring of a softening point A.
[FIG. 2] FIG. 2 illustrates a result of measuring of a melting point of a resin.

### DETAILED DESCRIPTION OF THE INVENTION

Any of conventionally known nonwovens may be used as a reinforcing nonwoven layer of the nonwoven for reinforcing a foam-molded article of the present invention. Preferred are a nonwoven having a tear strength of not less than 20N, a strength of not less than 10 N/cm after foaming (wherein, the strength is measured in accordance with JIS L 1913 (2010) after cutting a nonwoven layer after foaming out), and a high-density portion where seepage of urethane may be prevented.

A resin constituting of a nonwoven used for the reinforcing nonwoven layer preferably includes polyesters, polyolefins and polyamides. Particularly preferred are polyesters and polyolefins, which are general-purpose thermoplastic resins and low-priced. Examples of the polyesters include homo-polyesters such as polybutylene terephthalate (PBT), polyethylene terephthalate (PET), polybutylene naphthalate (PBN), polyethylene naphthalate (PEN), poly cyclohexane dimethyl terephthalate (PCHT), and polytrimethylene terephthalate (PTT), and copolymerized polyesters thereof. Further, examples of the polyolefins include polyethylene and polypropylene.

Examples of a method for producing the nonwoven used for the reinforcing nonwoven layer include; a spunbond method, a melt-blow method, and the like regarding filament nonwovens; and a mechanical intertwining such as a needle-punching and a spunlacing or the like, a chemical bonding, and a thermal bonding regarding staple nonwovens. Further, the composites thereof may be also used.

Preferable examples of the reinforcing nonwoven layer comprising spunbonded nonwovens include a composite nonwoven where a bulky nonwoven having a mass per unit area of 30 to 200 g/m² and a porosity of 90 to 94% is integrated with a dense nonwoven having a mass per unit area of 20 to 100 g/m² and a porosity of 87 to 91% by needle-punching; a single layer of a needle-punched spunbonded nonwoven having a density difference in the thickness direction that has both functions of a urethane reinforcing layer and a seepage preventing layer when the urethan is foamed; and further, a spunbonded nonwoven having a mass per unit area of 50 to 200 g/m² and a thickness of 0.5 to 2.0 mm that comprises a crimped filament nonwoven having 2 to 40 crimps/25 mm and a fiber diameter of 1 to 30 µm.

Further, preferable examples of a composite nonwoven layer comprising a staple nonwoven and a spunbond nonwoven include a composite nonwoven layer produced by placing a staple-fiber carded web on one or both surfaces of a spunbonded nonwoven including fibers having a fiber diameter of 1 to 23 dtex and a mass per unit area of 20 to 100 g/m² and integrating them by needle-punching.

A resin for a resin layer has a softening point A of not lower than 20°C and not higher than 60°C, preferably not lower than 30°C and lower than 55°C, and more preferably not lower than 35°C and lower than 50°C, whereby a mold-setting-property becomes satisfactory. When the softening point A is lower than 20°C, stickness may increase in a normal storage state. Thus, a handling property is deteriorated when stored in a stacked state, and complete adhesion may occur in some cases. When the softening point A is higher than 60°C, adhesive at a mold temperature may become insufficient. Thus, a setting-property is deteriorated, thus a problem of drop-off during operation may arise. The softening point A within the above range may be obtained when a resin having a Vicat softening temperature of not lower than 20°C and not higher than 60°C is used.

A kind of the resin is not limited to a specific one when the resin has the softening point A within the above range. An ethylene-vinyl acetate copolymer, an ethylene-ethyl acrylate copolymer, an ionomer resin, a urethane resin, or a derivative thereof is preferably used.

Further, a resin for the resin layer may have a melting point, that is measured by Differential scanning calorimetry, of not lower than 30°C and not higher than 60°C, preferably not lower than 30°C and lower than 55°C, and more preferably not lower than 35°C and lower than 50°C, whereby a mold-setting-property becomes satisfactory. When the melting point is lower than 30°C, stickness may increase in a normal storage state. Thus, a handling property is deteriorated when stored in a stacked state, and complete adhesion may occur in some cases. When the melting point is higher than 60°C, adhesive at a mold temperature may become insufficient. Thus, a setting-property is deteriorated, thus a problem of drop-off during operation may arise.

Further, a resin for the resin layer may have a melting energy, that is measured by Differential scanning calorimetry, of not lower than 40 J/g and not higher than 100 J/g, preferably not lower than 45 J/g and not higher than 80 J/g, and more preferably not lower than 50 J/g and not higher than 80 J/g, whereby a mold-setting-property becomes satisfactory. When the melting energy is lower than 40 J/g, stickness may increase depending on environmental changes in a normal storage state. Thus, a handling property is deteriorated when stored in a stacked state, and complete adhesion may occur in some cases. When the melting energy is higher than 100 J/g, it may take time for adhesion to a mold, and a problem of deteriorating workability may arise.

When the resin for the resin layer has the melting point and the melting energy within the above ranges, a kind of the resin is not limited to a specific one. An ethylene-vinyl acetate copolymer, an ethylene-ethyl acrylate copolymer, an ionomer resin, a urethane resin, or a derivative thereof is preferably used.

The nonwoven for reinforcing a foam-molded article comprising the reinforcing nonwoven and the resin layer may have an air permeability of preferably not lower than 30 cc/cm²/sec, more preferably not lower than 40 cc/cm²/sec and not higher than 300 cc/cm²/sec, and even more preferably not lower than 50 cc/cm²/sec and not higher than 250 cc/cm²/sec. When the air permeability is lower than 30 cc/cm²/sec, it may be difficult to remove gas generated while urethane is foamed, and the foamed urethane molded product may become defective. On the other hand, when the air permeability is higher than 300 cc/cm²/sec, urethane may seep through the nonwoven for reinforcing a foam-molded article, and thus a problem may arise that contact with a metal spring would make a strange noise.

An amount of the resin for the resin layer is not limited to a specific one. The amount of the resin is preferably not less than 10 g/m² and not more than 60 g/m², more preferably not less than 10 g/m² and not more than 50 g/m², and even more preferably not less than 15 g/m² and not more than 40 g/m². When the amount of the resin is less than 10 g/m², a mold-setting-property of the nonwoven for reinforcing a foam-molded article may become unsatisfactory. When the amount of the resin is more than 60 g/m², it may be difficult to assure the air permeability.

Examples of the methods for being overlapped by a resin and obtaining an optimal air permeability may include publicly known methods such as a resin-extruding lamination method, a tandem extrusion lamination method, a dry lamination method, or a curtain spray method. Further, for example, dot processing by printing or the like may be used. An area ratio of the resin layer which is formed by using these methods is preferably not less than 10% and not greater than 90%, more preferably not less than 20% and not greater than 80%, and even more preferably not less than 30% and not greater than 70% relative to an area of the reinforcing nonwoven. When the area ratio of the formed resin layer is less than 10%, a mold-setting-property may be unsatisfactory. When the area ratio thereof is greater than 90%, it is difficult to assure the air permeability.

A resin layer that enables application of a mold-setting-property and an air permeability to be better optimized, is preferably obtained by a method where resin layers are linearly arranged at intervals or arranged in a dot pattern. When the resin layers are linearly arranged, the resin layer has a width of preferably 0.3 to 10 mm and an interval between the resins is preferably 1 to 10 mm. When the resin layers are arranged in a dot pattern, the shape of the dot is not particularly specified, and may include a round dot, a rhombus-shaped dot, or the like. The size thereof is not particularly specified but may have a diameter of preferably not less than 1 mm and not greater than 10 mm if the dot is assumed to be round. The arrangement thereof may be a lattice-shaped arrangement, a zigzag arrangement, or the like.

The nonwoven for reinforcing a foam-molded article comprising the reinforcing nonwoven and the resin layer may have a mold-setting-property at 70°C, which may be measured in the method described below, of preferably not lower than 1.5 Nϕ22 mm, and more preferably not lower than 2.0 N/ϕ22 mm and lower than 20.0 N/ϕ22 mm. When the mold-setting-property is lower than 1.5 Nϕ22 mm, the reinforcing nonwoven might be dropped off in a process step after setting in a mold. On the other hand, when the mold-setting-property is higher than 20.0 Nϕ22 mm, taking-out from the mold after foaming may be difficult, and further, the reinforcing nonwoven might be separated from the foamed urethane.

Further, the nonwoven may have a mold-setting-property at 30°C of preferably not higher than 1.5 N/ϕ22 mm, and more preferably not higher than 1.0 Nϕ22 mm. When the mold-setting-property at 30°C is higher than 1.5 N/ϕ22 mm, the layers might be adhered to each other when stored in a stacked state or a rolled state, thereby deteriorating handling property.

The nonwoven for reinforcing a foam-molded article of the present invention is not limited to use for cushions. The nonwoven for reinforcing a foam-molded article of the present invention is useful also for various kinds of interior materials for vehicles, construction materials, surface-foamed molded articles for electric appliances, or the like, as a nonwoven for reinforcing a foam-molded article which is obtained by molding in a mold.

### EXAMPLES

Hereinafter, the present invention will be described more in detail with reference to Examples and Comparative Examples, but the present invention should not be limited to these Examples at all.

Evaluations of Examples and Comparative Examples in the present invention was made based on the following methods.

### (1) Softening point A (°C)

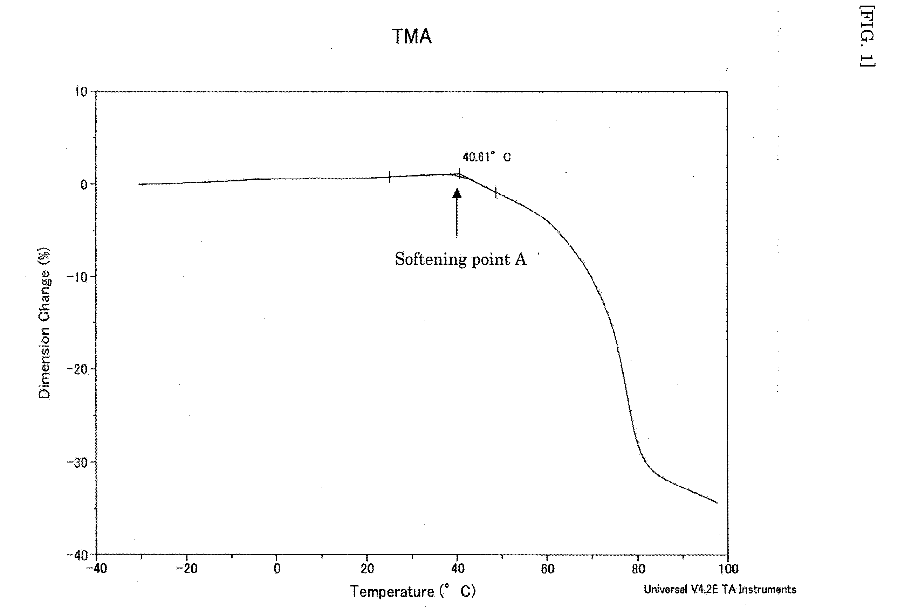

A resin layer was sampled from a reinforcing nonwoven, and a softening point A was obtained by TMA (thermomechanical analysis) by using "Q400" manufactured by TA instruments. A probe was a probe having a needle, a load was 0.1 N, a temperature was from -30°C to 100°C, a temperature rising rate was 5°C /min, and atmosphere was under N₂. As illustrated in FIG. 1, a point of intersection of two tangent lines was determined as the softening point A.

### (2) Melting point of resin (°C)

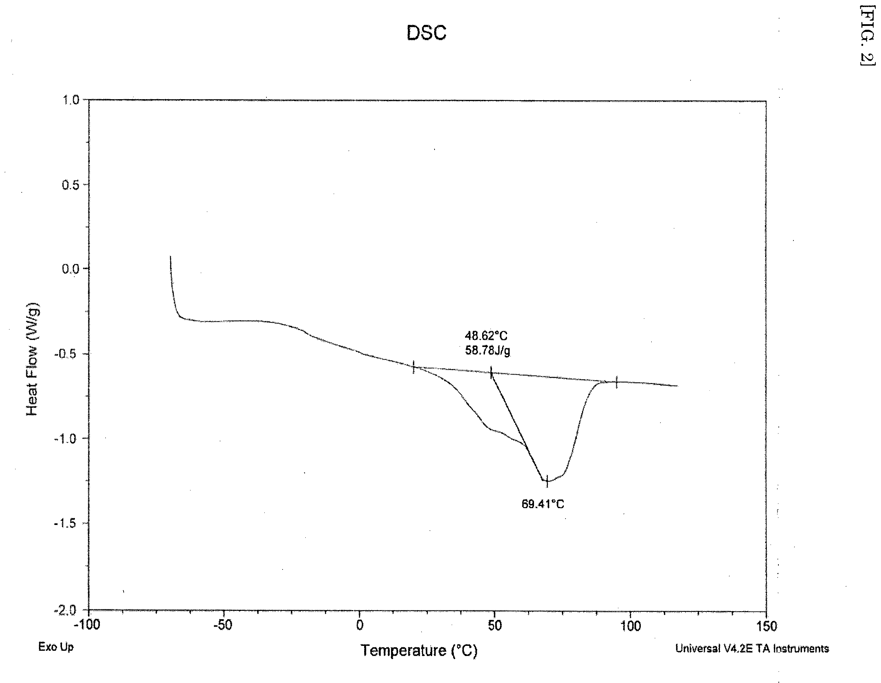

A resin part (4 to 5 mg) only was taken from a nonwoven for reinforcing a foam-molded article. In a case where the nonwoven was taken together therewith, the measurement was performed as it was. Q100 manufactured by TA instruments was used as a device and a temperature was increased from -70°C to 120°C at a rate of 20°C/min. The measurement was performed under a nitrogen atmosphere. Referring to a chart, a point of intersection of the tangent line and the base line (20°C to 95°C) shown in FIG. 2 was determined as the melting point. In the case shown in FIG. 2, the melting point was 48.62°C.

### (3) Melting energy of resin (J/g)

A melting energy was obtained based on the chart obtained by the measurement described above in (2). In the case shown in FIG. 1, the melting energy was 58.78 J/g.

### (4) Vicat softening temperature (°C)

Measurement was performed in accordance with JIS K 7206 (1999) "Plastics - Thermoplastic materials - Determination of Vicat softening temperature (VST)".

### (5) Air permeability (cc/cm²/sec)

Measurement was performed in accordance with JIS L 1096 (2010) "Testing methods for woven and knitted fabrics" 8.26.1 A method (Frazier method).

### (6) Mold-setting-property (N/ϕ22 mm)

A test piece having a width of 25 mm and a length of 100 mm was cut out and one end of the test piece was compressed against one end of a metal plate (SS400 flat bar having a width of 30 mm and a length of 100 mm), by using 51.6 kPa "Gage Mate" manufactured by Kyowa, under a terminal load of 2 kgf/ϕ22 mm at 30°C±3°C and 70°C±3°C for 10 seconds. Thereafter, the metal plate was set at an upper part of a chuck of a tensile testing machine manufactured by Shimadzu and the other end of the test piece was set at a lower part of the chuck thereof such that a distance between the chucks was 10 mm. A tensile test was performed at a tensile speed of 100 mm/minute, and a maximum strength was measured.

### (7) Handling property of reinforcing nonwoven at room temperature of 30°C

Test pieces (20 cm×20 cm) were cut out. Ten of the test pieces were piled up and left as they were in a room at room temperature of 30°C under a load of 10 kg/400 cm² for 24 hours. Thereafter, a weight was removed and a state when the test pieces were taken out one by one was evaluated as follows.
Good: The test pieces were able to be taken out without adhesion of each other.
Poor: It was difficult to take out the test pieces because of adhesion each other.

### (8) Area ratio of resin layer (%)

An image was taken from the resin layer side by SEM, and an area of the resin layer per unit was measured, thereafter indicated as percentage.

### (9) Foam-molding property

Good: A trace of gas was not on a surface of a foamed urethane molded product, and the foamed urethane molded product was foamed well.
Poor: A trace of gas was on a surface of a foamed urethane molded product and pit-like defective portions were found.

<Example 1-1>

HIRODINE 7504 manufactured by YASUHARA CHEMICAL CO., LTD. (ethylene-vinyl acetate copolymer, Vicat softening temperature of 42°C) having a width of 1 mm was extruded from a T-die, and overlapped a white surface side of a nonwoven VOLANS™ "CRE3080" manufactured by TOYOBO CO., LTD., so as to be linearly arranged parallel to the longitudinal direction of the nonwoven at intervals of 2 mm. The resin was 20 g/m².

### <Example 1-2>

HIRODINE 7504 manufactured by YASUHARA CHEMICAL CO., LTD. (ethylene-vinyl acetate copolymer, Vicat softening temperature of 42°C) having a width of 1 mm was extruded from a T-die, and overlapped one side of a nonwoven TAFNEL™ "ESE444" manufactured by Mitsui Chemicals, Inc., so as to be linearly arranged parallel to the longitudinal direction of the nonwoven at intervals of 2 mm. The resin was 30 g/m².

### <Example 1-3>

HIRODINE 7504 manufactured by YASUHARA CHEMICAL CO., LTD. (ethylene-vinyl acetate copolymer, Vicat softening temperature of 42°C) having a width of 2 mm was extruded from a T-die, and overlapped one side of a nonwoven TAFNEL™ "ESE444" manufactured by Mitsui Chemicals, Inc., so as to be linearly arranged parallel to the longitudinal direction of the nonwoven at intervals of 2 mm. The resin was 30 g/m².

### <Example 1-4>

HIRODINE 7504 manufactured by YASUHARA CHEMICAL CO., LTD. (ethylene-vinyl acetate copolymer, Vicat softening temperature of 42°C) having a width of 1 mm was extruded from a T-die, and overlapped a white surface side of a nonwoven VOLANS™ "CRE3080" manufactured by TOYOBO CO., LTD., in a dot pattern by screen printing. The resin was 20 g/m².

### <Comparative example 1-1>

HIRODINE 7536 manufactured by YASUHARA CHEMICAL CO., LTD. (ethylene-vinyl acetate copolymer, Vicat softening temperature of 83°C) having a width of 1 mm was extruded from a T-die, and overlapped a white surface side of a nonwoven VOLANS™ "CRE3080" manufactured by TOYOBO CO., LTD., so as to be linearly arranged parallel to the longitudinal direction of the nonwoven at intervals of 2 mm. The resin was 20 g/m²

### <Comparative example 1-2>

Acrylic resin ATR-1 manufactured by Saiden Chemical Industry Co.,Ltd. having a width of 1 mm was applied on a white surface side of a nonwoven VOLANS™ "CRE3080" manufactured by TOYOBO CO., LTD., so as to be 20g/m². The acrylic resin had a high viscosity even at normal temperature (20°C), thus a sample of the resin layer could not be taken, and the softening point A could not be measured.

### <Comparative example 1-3>

HIRODINE 7528 manufactured by YASUHARA CHEMICAL CO., LTD. (ethylene-vinyl acetate copolymer, Vicat softening temperature of 40°C) having a width of 2 mm was extruded from a T-die, and overlapped a white surface side of a nonwoven VOLANS™ "CRE3080" manufactured by TOYOBO CO., LTD., so as to be linearly arranged parallel to the longitudinal direction of the nonwoven at intervals of 0.1 mm. The resin was 50 g/m².

### <Comparative example 1-4>

HIRODINE 7528 manufactured by YASUHARA CHEMICAL CO., LTD. (ethylene-vinyl acetate copolymer, Vicat softening temperature of 40°C) having a width of 1 mm was extruded from a T-die, and overlapped a white surface side of a nonwoven VOLANS™ "CRE3080" manufactured by TOYOBO CO., LTD., so as to be linearly arranged parallel to the longitudinal direction of the nonwoven at intervals of 9 mm. The resin was 5 g/m².

The each measured physical property of the nonwoven for reinforcing a foam-molded article obtained in Examples 1-1 to 1-4 and Comparative examples 1-1 to 1-4 is summarized in Table 1.

**[Table 1]**

| | | Example 1-1 | Example 1-2 | Example 1-3 | Example 1-4 | Comparative example 1-1 | Comparative example 1-2 | Comparative example 1-3 | Comparative example 1-4 |
|---|---|---|---|---|---|---|---|---|---|
| Softening point A (°C) | | 42.5 | 42.5 | 42.5 | 42.5 | 83.4 | - | 40.6 | 40.6 |
| Air permeability (cc/cm²/sec) | | 127 | 90 | 75 | 130 | 129 | 23 | 20 | 138 |
| Area ratio of resin layer (%) | | 33 | 33 | 50 | 30 | 33 | 33 | 98 | 10 |
| Mold-setting-property (N/ϕ22mm) | 30°C | 0 | 0 | 0 | 0 | 0 | 10 | 0 | 0 |
| | 70°C | 2.8 | 2.4 | 3.0 | 2.5 | 0 | 2.0 | 3.2 | 0.5 |
| Handling property | | Good | Good | Good | Good | Good | Poor | Good | Good |
| Foam-molding property | | Good | Good | Good | Good | Good | Poor | Poor | Good |

### <Example 2-1>

HIRODINE 7528 manufactured by YASUHARA CHEMICAL CO., LTD. (ethylene-vinyl acetate copolymer, Vicat softening temperature of 40°C) having a width of 1 mm was extruded from a T-die, and overlapped a white surface side of a nonwoven VOLANS™ "CRE3080" manufactured by TOYOBO CO., LTD., so as to be linearly arranged parallel to the longitudinal direction of the nonwoven at intervals of 2 mm. The resin was 30 g/m².

### <Example 2-2>

HIRODINE 7528 manufactured by YASUHARA CHEMICAL CO., LTD. (ethylene-vinyl acetate copolymer, Vicat softening temperature of 40°C) having a width of 1 mm was extruded from a T-die, and overlapped one side of a nonwoven TAFNEL™ "ESE444" manufactured by Mitsui Chemicals, Inc., so as to be linearly arranged parallel to the longitudinal direction of the nonwoven at intervals of 2 mm. The resin was 20 g/m².

### <Example 2-3>

HIRODINE 7504 manufactured by YASUHARA CHEMICAL CO., LTD. (ethylene-vinyl acetate copolymer, Vicat softening temperature of 42°C) having a width of 2 mm was extruded from a T-die, and overlapped a white surface side of a nonwoven VOLANS™ "CRE3080" manufactured by TOYOBO CO., LTD., so as to be linearly arranged parallel to the longitudinal direction of the nonwoven at intervals of 2 mm. The resin was 20 g/m².

### <Example 2-4>

HIRODINE 7528 manufactured by YASUHARA CHEMICAL CO., LTD. (ethylene-vinyl acetate copolymer, Vicat softening temperature of 40°C) having a width of 1 mm was extruded from a T-die, and overlapped a white surface side of a nonwoven VOLANS™ "CRE3080" manufactured by TOYOBO CO., LTD., in a dot pattern by screen printing. The resin was 20 g/m².

### <Comparative example 2-1>

HIRODINE 7536 manufactured by YASUHARA CHEMICAL CO., LTD. (ethylene-vinyl acetate copolymer, Vicat softening temperature of 83°C) having a width of 1 mm was extruded from a T-die, and overlapped a white surface side of a nonwoven VOLANS™ "CRE3080" manufactured by TOYOBO CO., LTD., so as to be linearly arranged parallel to the longitudinal direction of the nonwoven at intervals of 2 mm. The resin was 20 g/m².

### <Comparative example 2-2>

Acrylic resin ATR-1 manufactured by Saiden Chemical Industry Co.,Ltd. having a width of 1 mm was applied on a white surface side of a nonwoven VOLANS™ "CRE3080" manufactured by TOYOBO CO., LTD., so as to be 20g/m². The acrylic resin had a high viscosity even at normal temperature (20°C), thus a sample of the layered resin could not be taken, and the softening point A could not be measured.

### <Comparative example 2-3>

HIRODINE 7528 manufactured by YASUHARA CHEMICAL CO., LTD. (ethylene-vinyl acetate copolymer, Vicat softening temperature of 40°C) having a width of 2 mm was extruded from a T-die, and overlapped a white surface side of a nonwoven VOLANS™ "CRE3080" manufactured by TOYOBO CO., LTD., so as to be linearly arranged parallel to the longitudinal direction of the nonwoven at intervals of 0.1 mm. The resin was 50 g/m².

### <Comparative example 2-4>

HIRODINE 7528 manufactured by YASUHARA CHEMICAL CO., LTD. (ethylene-vinyl acetate copolymer, Vicat softening temperature of 40°C) having a width of 1 mm was extruded from a T-die, and overlapped a white surface side of a nonwoven VOLANS™ "CRE3080" manufactured by TOYOBO CO., LTD., so as to be linearly arranged parallel to the longitudinal direction of the nonwoven at intervals of 9 mm. The resin was 5 g/m².

The each measured physical property of the nonwoven for reinforcing a foam-molded article obtained in Examples 2-1 to 2-4 and Comparative examples 2-1 to 2-4 is summarized in Table 3.

**[Table 2]**

| | | Example 2-1 | Example 2-2 | Example 2-3 | Example 2-4 | Comparative example 2-1 | Comparative example 2-2 | Comparative example 2-3 | Comparative example 2-4 |
|---|---|---|---|---|---|---|---|---|---|
| Mold-setting-property (N/ϕ22mm) | 30°C | 0 | 0 | 0 | 0 | 0 | 10 | 0 | 0 |
| | 70°C | 2.8 | 2.4 | 3.0 | 2.5 | 0 | 2.0 | 3.2 | 0.5 |
| Air permeability (cc/cm²/sec) | | 120 | 95 | 102 | 130 | 129 | 23 | 20 | 138 |
| Handling property | | Good | Good | Good | Good | Good | Poor | Good | Good |
| Foam-molding property | | Good | Good | Good | Good | Good | Poor | Poor | Good |

### <Example 3-1>

HIRODINE 7528 manufactured by YASUHARA CHEMICAL CO., LTD. (ethylene-vinyl acetate copolymer) having a width of 1 mm was extruded from a T-die, and overlapped a white surface side of a nonwoven VOLANS™ "CRE3080" manufactured by TOYOBO CO., LTD., so as to be linearly arranged parallel to the longitudinal direction of the nonwoven at intervals of 2 mm. The resin was 20 g/m².

### <Example 3-2>

HIRODINE 7528 manufactured by YASUHARA CHEMICAL CO., LTD. (ethylene-vinyl acetate copolymer) having a width of 1 mm was extruded from a T-die, and overlapped one side of a nonwoven TAFNEL™ "ESE444" manufactured by Mitsui Chemicals, Inc., so as to be linearly arranged parallel to the longitudinal direction of the nonwoven at intervals of 2 mm. The resin was 30 g/m².

### <Example 3-3>

Ethylene-vinyl acetate copolymer resin manufactured by YASUHARA CHEMICAL CO., LTD. (Vicat softening temperature of 44°C) having a width of 2 mm was extruded from a T-die, and overlapped a white surface side of a nonwoven VOLANS™ "CRE3080" manufactured by TOYOBO CO., LTD., so as to be linearly arranged parallel to the longitudinal direction of the nonwoven at intervals of 2 mm. The resin was 20 g/m².

### <Example 3-4>

HIRODINE 7528 manufactured by YASUHARA CHEMICAL CO., LTD. (ethylene-vinyl acetate copolymer) having a width of 1 mm was extruded from a T-die, and overlapped a white surface side of a nonwoven VOLANS™ "CRE3080" manufactured by TOYOBO CO., LTD., in a dot pattern by screen printing. The resin was 20 g/m².

### <Comparative example 3-1>

HIRODINE7536 manufactured by YASUHARA CHEMICAL CO., LTD. (ethylene-vinyl acetate copolymer) having a width of 1 mm was extruded from a T-die, and overlapped a white surface side of a nonwoven VOLANS™ "CRE3080" manufactured by TOYOBO CO., LTD., so as to be linearly arranged parallel to the longitudinal direction of the nonwoven at intervals of 2 mm. The resin was 20 g/m².

### <Comparative example 3-2>

Acrylic resin ATR-1 manufactured by Saiden Chemical Industry Co.,Ltd. having a width of 1 mm was applied on a white surface side of a nonwoven VOLANS™ "CRE3080" manufactured by TOYOBO CO., LTD., so as to be 20g/m². The resin had a high viscosity even at normal temperature (20°C), thus a sample of the resin layer could not be taken, and the melting point could not be measured.

### <Comparative example 3-3>

HIRODINE 7528 manufactured by YASUHARA CHEMICAL CO., LTD. (ethylene-vinyl acetate copolymer) having a width of 2 mm was extruded from a T-die, and overlapped a white surface side of a nonwoven VOLANS™ "CRE3080" manufactured by TOYOBO CO., LTD., so as to be linearly arranged parallel to the longitudinal direction of the nonwoven at intervals of 0.1 mm. The resin was 50 g/m².

The each measured physical property of the nonwoven for reinforcing a foam-molded article obtained in Examples 3-1 to 3-4 and Comparative examples 3-1 to 3-3 is summarized in Table 3.

**[Table 3]**

| | | Example 3-1 | Example 3-2 | Example 3-3 | Example 3-4 | Comparative example 3-1 | Comparative example 3-2 | Comparative example 3-3 |
|---|---|---|---|---|---|---|---|---|
| Melting point of resin (°C) | | 49 | 34 | 33 | 48 | 80 | Unmeasurable | 38 |
| Melting energy of resin (J/g) | | 59 | 42 | 70 | 58 | 75 | 0 | 49 |
| Air permeability (cc/cm²/sec) | | 120 | 95 | 102 | 130 | 129 | 23 | 20 |
| Area ratio of resin (%) | | 33 | 33 | 50 | 30 | 33 | 33 | 98 |
| Mold-setting-property (N/ϕ22mm) | 30°C | 0 | 0 | 0 | 0 | 0 | 10 | 0 |
| | 70°C | 2.4 | 2.8 | 2.7 | 2.5 | 0 | 2.0 | 3.2 |
| Handling property | | Good | Good | Good | Good | Good | Poor | Good |
| Foam-molding property | | Good | Good | Good | Good | Good | Poor | Poor |

### INDUSTRIAL APPLICABILITY

The nonwoven for reinforcing a foam-molded article of the present invention makes it possible to use a conventional mold without adding any improvements, and to be set in the mold easily without contaminating the mold. Thus, the process steps from sewing to foam-molding may be simplified, and productivity may be greatly improved, therefore contribution to the industry is great.

## Claims

1. A nonwoven for reinforcing a foam-molded article, the nonwoven comprising:
a reinforcing nonwoven layer, and
a resin layer,
wherein,
the resin layer overlaps the reinforcing nonwoven layer,
a resin for the resin layer has a softening point A of not lower than 20°C and not higher than 60°C, and
the nonwoven has an air permeability of not lower than 30 cc/cm²/sec and not higher than 300 cc/cm²/sec.

2. The nonwoven for reinforcing a foam-molded article according to claim 1, wherein,
a mold-setting-property at 70°C is not lower than 1.5 Nϕ22 mm.

3. A nonwoven for reinforcing a foam-molded article, the nonwoven comprising:
a reinforcing nonwoven layer, and
a resin layer,
wherein,
the resin layer overlaps the reinforcing nonwoven layer,
a resin for the resin layer has a melting point of not lower than 30°C and not higher than 60°C,
the resin for the resin layer has a melting energy of not lower than 40 J/g and not higher than 100 J/g, and
the nonwoven has an air permeability of not lower than 30 cc/cm²/sec and not higher than 300 cc/cm²/sec.

4. The nonwoven for reinforcing a foam-molded article according to any one of claims 1 to 3, wherein,
the resin layer is linearly arranged at intervals.

5. The nonwoven for reinforcing a foam-molded article according to any one of claims 1 to 3, wherein,
the resin layer is arranged in a dot pattern.

## Patentansprüche

1. Vlies zum Verstärken eines schaumgeformten Gegenstands, wobei das Vlies aufweist:
eine verstärkende Vliesschicht und
eine Harzschicht,
wobei
die Harzschicht die verstärkende Vliesschicht überlappt,
ein Harz für die Harzschicht einen Erweichungspunkt A von nicht niedriger als 20°C und nicht höher als 60°C aufweist und
das Vlies eine Luftdurchlässigkeit von nicht niedriger als 30 cm³/cm²/s und nicht höher als 300 cm³/cm²/s aufweist.

2. Vlies zum Verstärken eines schaumgeformten Gegenstands nach Anspruch 1, wobei
eine Formsetzungseigenschaft bei 70°C nicht niedriger als 1,5 N/ϕ22 mm ist.

3. Vlies zum Verstärken eines schaumgeformten Gegenstands, wobei das Vlies aufweist:
eine verstärkende Vliesschicht und
eine Harzschicht,
wobei
die Harzschicht die verstärkende Vliesschicht überlappt,
ein Harz für die Harzschicht einen Schmelzpunkt von nicht niedriger als 30°C und nicht höher als 60°C aufweist,
das Harz für die Harzschicht eine Schmelzenergie von nicht niedriger als 40 J/g und nicht höher als 100 J/g aufweist und
das Vlies eine Luftdurchlässigkeit von nicht niedriger als 30 cm³/cm²/s und nicht höher als 300 cm³/cm²/s aufweist.

4. Vlies zum Verstärken eines schaumgeformten Gegenstandes nach einem der Ansprüche 1 bis 3, wobei
die Harzschicht linear in Intervallen angeordnet ist.

5. Vlies zum Verstärken eines schaumgeformten Gegenstandes nach einem der Ansprüche 1 bis 3, wobei
die Harzschicht in einer Punktstruktur angeordnet ist.

## Revendications

1. Non-tissé pour le renforcement d'un article moulé en mousse, le non-tissé comprenant:
une couche non tissée de renforcement, et
une couche de résine,
dans lequel
la couche de résine chevauche la couche non tissée de renforcement,
une résine pour la couche de résine a un point de ramollissement A qui n'est pas inférieur à 20°C et pas supérieur à 60°C, et
le non-tissé présente une perméabilité à l'air qui n'est pas inférieure à 30 cc/cm²/s et
pas supérieure à 300 cc/cm²/s.

2. Non-tissé pour le renforcement d'un article moulé en mousse selon la revendication 1, dans lequel
une propriété de réglage de moule à 70°C n'est pas inférieure à 1,5 N/ϕ22 mm.

3. Non tissé pour le renforcement d'un article moulé en mousse, le non-tissé comprenant:
une couche non tissée de renforcement, et
une couche de résine,
dans lequel,
la couche de résine chevauche la couche non tissée de renforcement,
une résine pour la couche de résine présente un point de fusion qui n'est pas inférieur à 30°C et pas supérieur à 60°C,
la résine pour la couche de résine a une énergie de fusion qui n'est pas inférieure à 40 J/g et pas supérieure à 100 J/g, et
le non-tissé présente une perméabilité à l'air qui n'est pas inférieure à 30 cc/cm²/s et
pas supérieure à 300 cc/cm²/s.

4. Non-tissé pour le renforcement d'un article moulé en mousse selon l'une quelconque des revendications 1 à 3, dans lequel
la couche de résine est disposée linéairement par intervalles.

5. Non-tissé pour le renforcement d'un article moulé en mousse selon l'une quelconque des revendications 1 à 3, dans lequel
la couche de résine est agencée en motifs en pointillés.
